# EUROPÄISCHE PATENTSCHRIFT

(11) **EP 1 966 577 B1**
(45) Veröffentlichungstag und Bekanntmachung des Hinweises auf die Patenterteilung: **25.07.2012**
(21) Anmeldenummer: 06841597.5
(22) Anmeldetag: 22.12.2006
(51) Int. Cl.: G01L 9/06

(54) **DRUCKMESSZELLE**
PRESSURE-MEASURING CELL
CELLULE DE MESURE DE PRESSION

(30) Priorität: 31.12.2005 DE 102005063213
(43) Veröffentlichungstag der Anmeldung: 10.09.2008
(73) Patentinhaber: Endress+Hauser GmbH+Co. KG, 79689 Maulburg (DE)
(72) Erfinder: THAM, Anh Tuan, 10243 Berlin (DE); BURCZYK, Dietfried, 14513 Teltow (DE); STOLZE, Dieter, 14469 Potsdam (DE)
(74) Vertreter: Andres, Angelika Maria
(86) Internationale Anmeldenummer: PCT/EP2006/070169
(87) Internationale Veröffentlichungsnummer: WO 2007/077168

(56) Entgegenhaltungen:
- WO-A-2004/083110
- US-A1- 2002 066 319

## Beschreibung

Die vorliegende Erfindung betrifft eine Druckmesszelle, insbesondere eine Druckmesszelle mit mindestens einem verformmgsabhängigen Widerstandselement. Gängige Druckmesszellen weisen vier verformungsabhängige Widerstandselemente in einer Vollbrückenachaltung auf, wobei zwei erste Widerstandselemente auf, die eine erste Verformungsabhängigkeit und zwei zweite Widerstandselemente eine zweite Verformungsabhängigkeit aufweisen. Die Widerstandselemente sind alternierend in einer geschlossenen Brückenschaltung angeordnet, welche über eine erste Diagonale gespeist wird, und deren verfornungsabhängiges Signal über die zweite Diagonale der Brückenschaltung abgegriffen wird.

Widerstandselemente umfassen beispielsweise piezoresistive Halbleiterwiderstände, die durch lokale Dotierung in einem Basismaterial, beispielsweise Silizium erstellt sind. Insoweit als Dotierungen mit Konzentrationsgradienten einhergehen, können solche Widerstandselemente bzw. deren Verfomungsabhängigkeit insbesondere bei hohen Temperaturen zu Veränderungen neigen, da die Konzentrationsgradienten durch Diffusionsphänomene instabil sind.

Es besteht daher grundsätzlich Bedarf an Drucksensoren mit anderen Materialien, die nicht die genannten dotierungsbedingten Probleme aufweisen.

Eickhoff et al. haben im Journal of Applied Physics, Vol. 90, No. 7 die Piezoresistivität von AlₓGa₁₋ₓN-Schichten mit Wurtzitstruktur und AlₓGa₁₋ₓN /GaN-Heterostrukturen beschrieben. In der genannten Arbeit werden die experimentellen Ergebnisse zu verformungsabhängigen Widerständen tragfähig mit dem Modell eines mechanisch kontrollierten Gates eines Feldeffekt-Transistors interpretiert, dessen Widerstandswert von dem verformungsabhängigen piezoelektrischen Feld entlang der Achse senkrecht zur Ebene der Al ₓGa₁₋ₓN-Schichten abhängt.

Der Arbeit ist weiterhin zu entnehmen, dass die Al-Konzentration zwischen beispielsweise 0 und 0,35 als ein Parameter zur Variation der Verformungsabhängigkeit eines elektrischen Widerstands geeignet ist.

Stutzmann et al. haben in phys. Stat. Sol. (b) 228, No. 2, 505-512 (2001) den Einfluss der Polarität von AlₓGa₁₋ₓN-Schichten in Abhängigkeit von den Terminierungen mit N bzw. Ga oder Al auf die elektrischen Eigenschaften der Schichten beschrieben. Es erscheint insoweit interessant, die in den obigen Arbeiten beschriebenen Materialien zur Realisierung eines Drucksensors aufzugreifen.

Die internationale Veröffentlichung WO 2004/083110A offenbart hierzu einen Drucksensor, der einen Sensorkörper, eine Messmembran und mindestens zwei Widerstandselemente aufweist, wobei die Messmembran, die von dem Sensorkörper gehalten wird, mit einem Druck beaufschlagbar und druckabhängig verformbar ist; wobei die Widerstandselemente eine AlₓGa₁₋ₓN-Schicht aufweisen, wobei mindestens ein erstes Widerstandselement der mindestens zwei Widerstandselemente auf der Messmembran angeordnet ist und einen verformungsabhängigen Widerstandswert aufweist.

Der erfindungsgemäße Drucksensor umfasst

einen Sensorkörper;

eine Messmembran, die von dem Sensorkörper gehalten wird, mit einem Druck beaufschlagbar und druckabhängig verformbar ist; und

mindestens zwei Widerstandselemente die eine AlₓGa₁₋ₓN-Schicht aufweisen, wobei mindestens ein erstes Widerstandselement der mindestens zwei Widerstandselemente auf der Messmembran angeordnet ist und einen verformingsabhängigen Widerstandswert aufweist.

Vorzugsweise ist eine Messschaltung vorgesehen zum Erfassen eines Signals, welches von den Widerstandswerten der mindestens zwei Widerstandselemente in Ebene der AlₓGa₁₋ₓN-Schicht abhängt,
wobei erfingdungsgemäß das mindestens eine erste und das mindestens eine zweite Widerstandselement jeweils AlₓGa₁₋ₓN-Schichten mit unterschiedlichen Al-Anteilen aufweisen.

In einer Weiterbildung der Erfindung ist mindestens ein zweites Widerstandselement der mindestens zwei Widerstandselemente auf dem Sensorkörper bzw. dem Randbereich der Messmembran angeordnet, so dass dieses Widerstandselement eine allenfalls vernachlässigbare Verformungsabhängigkeit aufweist.

In einer Weiterbildung der Erfindung sind sowohl das mindestens eine erste Widerstandselement als auch das mindestens eine zweite Widerstandselement auf der Messmembran angeordnet, wobei, die Widerstandselemente bei einer druckabhängigen Verformung der Messmembran unterschiedliche Änderungen des jeweiligen Widerstandswertes erfahren.

Hierau können beispielsweise das mindestens eine erste und das mindestens eine zweite Widerstandselement an solchen Positionen angeordnet sein, die unterschiedliche druckabhängige verformungen aufweisen, beispielsweise auf unterschiedlichen Radien einer kreisförmigen Messmembran.

Als weitere Alternative zum Erzielen unterschiedlicher Widerstandsänderungen aufgrund der druckabbängigen Verformungen oder als Kombinationsmöglichkeit mit den zuvor genannten Maßnahmen zu diesem Zweck können das mindestens eine erste Widerstandselement und das mindestens eine zweite widerstandselement Al, ₓGa₁₋ₓ N-Schichten mit entgegengesetzten Polaritäten aufgrund unterschiedlicher Terminierung der Schichten anweisen. D.h. der eine Widerstandstyp weist eine N-terminierte Schicht auf und der andere Widerstandstyp eine Ga- bzw. Al-terminierte Schicht.

Derzeit ist es bevorzugt, wenn der Drucksensor vier Widerstandselemente aufweist die in einer Vollbrücke geschaltet sind, wobei zwei Widerstandselemente eines ersten Typs wie das zuvor beschriebene mindestens eine erste Widerstandselement und zwei Widerstandselemente eines zweiten Typs wie das zuvor beschriebene mindestens eine zweite Widerstandselement beschaffen sind. In einer vorteilhaften Ausgestalung der Vollbrücke weisen die Widerstandselemente bei der Gleichgewichtslage der Messmembran, also ohne druckabhängige Verformung, etwa den gleichen Widerstandswert auf.

Die Widerstandselemente können beispielsweisedurch metallische Leiterbahnen kontaktiert werden, deren Widerstandswert im Vergleich zum Widerstand der Widerstandselemente vernachlässigbar sind. Die Wiederstandselemente können beispielsweise eine Länge von nicht mehr als 1 mm vorzugsweise nicht mehr als 0,5 mm weiter bevorzugt nicht mehr als etwa 0,25 mm, und besonders bevorzugt nicht mehr als etwa 0.125 mm aufweisen. Die Länge bezieht sich hierbei auf die Ausdehnung der Widerstandselemente in Richtung des Stromflusses. Die Breite des Widerstandselementes ist ein Freiheitsgrad, mit dem bei gegebener Materialwahl und Länge der Wert des Widerstands festgelegt werden kann, wobei das Widerstandselement vorzugsweise über seine gesamte Breite von dem metallischen Leiter kontaktiert wird. Geeignete Breiten können beispielsweise im Bereich zwischen 0,25 mm und 2 mm, vorzugsweise zwischen 0,3 mm und 1 mm. liegen.

Die Schichtdicke der AlₓGa₁₋ₓN-Schicht beträgt beispielsweise nicht mehr als 0,2 µm, vorzugsweise nicht mehr als 0,1 µm, weiter bevorzugt nicht mehr als 0,05 µm und besonders bevorzugt nicht mehr als etwa 0,03 µm.

Die AlₓGa₁₋ₓN-Schicht kann beispielsweise auf einer GaN-Schicht von einigen 100 nm aufgebracht sein, welche Ihrerseits auf dem eigentlichen Substratmaterial der Messmembran angeordnet ist. Als Substratmaterial können beispielsweise Silizium, Siliziumnitrid, Korund oder Saphir verwendet werden, wobei die Stärke des Substratmaterials dem Messbereich des Drucksensors entsprechend gewählt werden kann. Beispielsweise können Siliziummembranen mit einer Dicke von 5 bis 50 µm verwendet werden.

Die Erfindung wird nun anhand der in den Zeichnungen dargestellten Ausführungsbeispiele erläutert. Es zeigt:

Fig. 1: einen schematischen Längsschnitt durch ein erstes Ausführungsbeispiel eines erfindungsgemäßen Drucksensors;

Fig. 2: eine Aufsicht auf die Messmembran des ersten Ausführungsbeispiels eines erfindungsgemäßen Drucksensors; und

Fig.3: eine Aufsicht auf die Messmembran eines zweiten Ausführungsbeispiels eines erfindungsgemäßen Drucksensors.

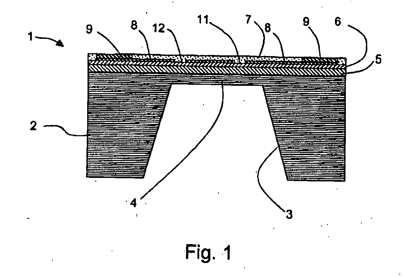

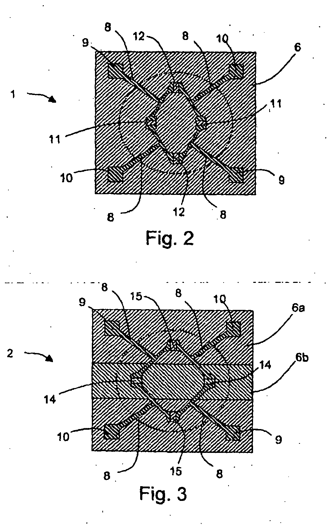

Der in Fign. 1 und 2 gezeigte Drucksensor 1 weist einen Si (111)-Grundkörper auf, in dem eine Aussparung 3 durch geätzt ist, um eine Messmembran 4 mit einer Stärke von etwa 5 µm zu präparieren. Auf der der Aussparung 3 abgewandten Oberseite des Grundkörpers 2 ist eine Schicht von etwa 600 nm GaN 5 aufgebracht, auf der eine Al ₓ Ga₁₋ₓN-Schicht 6 in einer Stärke von etwa 30 nm präpariert ist mit einem Al:Ga-Verhältnis von etwa 1:4. Diese Schicht weist einen verformungsabhängigen Widerstand auf, In dieser Schicht sind die vier Widerstandselemente 11 und 12 einer Vollbrücke realisiert; indem darauf metallische Leiterbahnen 8 präpariert sind, welche eine höhere Leitfähigkeit aufweisen als die AlₓGa₁₋ₓN-Schicht, und welche definierte Lücken aufweisen, in denen der Stromfluss durch die Al ₓGa₁₋ₓN-Schicht zu erfolgen hat. Insoweit liegen unter diesen Lücken die Widerstandselemente 11 und 12. Wie in Fig. 2 angedeutet, sind die Widerstandselemente paarweise auf unterschiedlichen Radien der Messmembran angeordnet, um unterschiedliche Druckabhängige Widerstandsänderungen zu erzielen. Die Vollbrücke wird über Kontaktpunke 9 gespeist, und das druckabhängige Signal wird diagonal dazu an Kontaktpunkten 10 abgegriffen.

Abgesehen von den Kontaktpunkten ist die Oberfläche der Messmembran 4 mit einer Passivierungsschicht, beispielsweise aus SiO2 7 in einer Stärke von etwa 150 nm.

Das in Fig. 3 gezeigte zweite Ausfühlungsbeispiel weist eine Messmembran auf, bei der prinzipiell der gleiche Schichtaufbau gegeben ist, wie beim ersten Ausführungsbeispiel, jedoch weist die Al ₓGa₁₋ₓN-Schicht eine laterale Hetero-Struktur auf, so dass die Widerstandselemente 14 und 15 an gleichen radialen Positionen der Messmembran angeordnet sein können und dennoch eine unterschiedliche druckabhängige Widerstandsänderung aufweisen.

Zur Erzielung der lateralen Heterostruktur können beispielsweise alternierende Streifen 6a und 6b mit unterschiedlichem Aluminiumgehalt präpariert werden, oder es können Streifen von N-terminierten Schichten neben Streifen von Ga-terminierten Schichten angeordnet sein.

Zur Präparation der Schichtstrukturen werden die üblichen Methoden der Halbleiterprozesstechnik eingesetzt. Bezüglich weiterer Einzelheiten zur Präparation sei auf die in der Einleitung zitierte Literatur verwiesen.

Abgesehen von der beschriebenen Art der Kontaktierung kann bei allen Ausführungsbeispielen über der Schicht mit den Widerstandselementen zunächst eine Isolatorschicht aufgebracht werden, in welche dann Kontaktfenster hineingeätzt werden. Die Dimensionierung bzw. Begrenzung der Widerstände in Längsrichtung, also in Richtung des Stromflusses erfolgt durch die Kontaktfenster. Anschließend erfolgt eine Bedampfung mit einem Metall, beispielsweise Aluminium. Die Strukturierung der Metallschicht erfolgt anschließend lithographisch. Die Widerstandselemente bzw. deren Kontaktzonen werden also im Bereich der Kontaktfenster durch die metallischen Leiterbahnen von oben kontaktiert.

## Patentansprüche

1. Drucksensor (1), umfassend:
einen Sensorkörper (2);
eine Messmembran (4), die von dem Sensorkörper gehalten wird, mit einem Druck beaufschlagbar und druckabhängig verformbar ist; und
mindestens zwei Widerstandselemente (11, 12) die eine AlₓGa₁₋ₓN-Schicht (6) aufweisen, wobei mindestens ein erstens Widerstandselement der mindestens zwei Widerstandselemente auf der Messmembran (4) angeordnet ist und einen verformungsabhängigen Widerstandswert aufweist, **dadurch gekennzeichnet, dass**
das mindestens eine erste und das mindestens eine zweite Widerstandselement jeweils AlₓGa₁₋ₓN-Schichten mit unterschiedlichen Al-Anteilen aufweisen.

2. Drucksensor nach Anspruch 1, wobei mindestens ein zweites Widerstandselement der mindestens zwei Widerstandselemente auf dem Sensorkörper bzw. dem Randbereich der Messmembran angeordnet ist, so dass das mindestens eine zweite Widerstandselement eine allenfalls vernachlässigbare Verformungsabhängigkeit aufweist.

3. Drucksensor nach Anspruch 1, wobei sowohl das mindestens eine erste Widerstandselement als auch das mindestens eine zweite Widerstandselement auf der Messmembran angeordnet sind, und die Widerstandselemente bei druckabhängigen Verformungen der Messmembran unterschiedliche Änderungen des jeweiligen Widerstandswertes erfahren.

4. Drucksensor nach Anspruch 3, wobei das mindestens eine erste und das mindestens eine zweite Widerstandselement an solchen Positionen angeordnet sein, die unterschiedliche druckabhängige Verformungen aufweisen.

5. Drucksensor nach Anspruch 4, wobei das mindestens eine erste und das mindestens eine zweite Widerstandselement auf unterschiedlichen Radien einer kreisförmigen Messmembran angeordnet sind.

6. Drucksensor nach einem der vorhergehenden Ansprüche, wobei das mindestens eine erste Widerstandselement und das mindestens eine zweite Widerstandselement AlₓGa₁₋ₓN-Schichten mit entgegengesetzten Polaritäten aufgrund unterschiedlicher Terminierung der Schichten aufweisen. D.h. der eine Widerstandstyp weist eine N-terminierte Schicht auf und der andere Widerstandstyp eine Ga- bzw. Al-terminierte Schicht

7. Drucksensor nach einem der vorhergehenden Ansprüche, welcher vier Widerstandselemente aufweist, die in einer Vollbrücke geschaltet sind, wobei zwei Widerstandselemente mit einer ersten Druckabhängigkeit des Widerstandswerts und zwei Widerstandselemente mit einer zweiten Druckabhänglgkeit des Widerstandswerts des zweiten Typs vorgesehen sind.

8. Druchsensor nach Anspruch 7, wobei die Widerstandselemente bei der Gleichgewichtslage der Messmembran also ohne druckabhängige Verformung, etwa den gleiche Widerstandswert aufweisen.

9. Drucksensor nach einem der vorhergehenden Ansprüche, wobei die Widerstandselemente durch metallische Leiterbahnen kontaktiert sind.

10. Drucksensor nach einem der vorhergehenden Ansprüche, wobei die Wiederstandselemente eine Länge von nicht mehr als 1 mm vorzugsweise nicht mehr als 0,5 mm, weiter bevorzugt nicht mehr als etwa 0.25 mm und besonders bevorzugt nicht mehr als etwa 0,125 mm aufweisen.

11. Drucksensor nach einem der vorhergehenden Ansprüche, wobei die Breiten der Widerstandselemente im Bereich zwischen 0,25 mm und 2 mm, vorzugsweise zwischen 0,5 mm und 1 mm liegen.

12. Drucksensor nach einem der vorhergehenden Ansprüche, wobei die Schichtdicke der AlₓGa₁₋ₓN-Schicht nicht mehr als 0,2 µm, vorzugsweise nicht mehr als 0,1 µm, weiter bevorzugt nicht mehr als 0,05 µm und besonders bevorzugt nicht mehr als etwa 0.03 µm beträgt.

13. Drucksensor nach einem der vorhergehenden Ansprüche, wobei die AlₓGa₁₋ₓ N-Schicht auf einer GaN-Schicht von einigen 100 nm aufgebracht ist, welche Ihrerseits auf dem eigentlichen Substratmaterial der Messmembran aufgebracht ist.

14. Drucksensor nach einem der vorhergehenden Ansprüche, wobei die Messmembran Silizium, Siliziumnitrid, Korund oder Saphir aufweist.

15. Drucksensor nach einem der vorhergehenden Ansprüche, weiterhin umfassend eine Messschaltung zum Erfassen eines Signals, welches von den Widerstandswerten der mindestens zwei Widerstandselemente in Ebene der AlₓGa₁₋ₓN-Schicht abhängt.

## Claims

1. Pressure sensor (1), comprising:
a sensor body (2);
a measuring diaphragm (4), which is held by the sensor body, can be exposed to a pressure and can be deformed as a function of the pressure; and
at least two resistance elements (11, 12) that have a AlₓGa₁₋ₓN layer (6), wherein at least a first resistance element of the two resistance elements, at least, is arranged on the measuring diaphragm (4) and has a deformation-dependent resistance value,
**characterized in that**
the first resistance element at least and the second resistance element at least both have AlₓGa₁₋ₓN layers with different Al proportions.

2. Pressure sensor as claimed in Claim 1, wherein at least a second resistance element of the two resistance elements, at least, is arranged on the sensor body or the edge of the measuring diaphragm such that the second resistance element, at least, presents a deformation dependence which is negligible at best.

3. Pressure sensor as claimed in Claim 1, wherein both the first resistance element, at least, and the second resistance element, at least, are arranged on the measuring diaphragm, and the resistance elements experience different changes in the individual resistance values in the event of pressure-dependent deformations of the measuring diaphragm.

4. Pressure sensor as claimed in Claim 3, wherein the first resistance element, at least, and the second resistance element, at least, are arranged at such positions that present different pressure-dependent deformations.

5. Pressure sensor as claimed in Claim 4, wherein the first resistance element, at least, and the second resistance element, at least, are arranged on different radii of a circular measuring diaphragm.

6. Pressure sensor as claimed in one of the previous claims, wherein the first resistance element, at least, and the second resistance element, at least, have AlₓGa₁₋ₓN layers with opposite polarities due to the different termination of the layers. This means that one resistor type has an N-terminated layer while the other resistor type has a Ga- or Al-terminated layer.

7. Pressure sensor as claimed in one of the previous claims which has four resistance elements which are switched in a full bridge wherein two resistance elements are provided with a first pressure dependence of the resistance value and two resistance elements with a second pressure dependence of the second type of resistance value.

8. Pressure sensor as claimed in Claim 7, wherein the resistance elements have more or less the same resistance value when the measuring diaphragm is in a state of equilibrium, i.e. not experiencing pressure-dependent deformation.

9. Pressure sensor as claimed in one of the previous claims, wherein the resistance elements are connected by metal conducting paths.

10. Pressure sensor as claimed in one of the previous claims, wherein the resistance elements are of a length of not more than 1 mm, preferably not more than 0.5 mm, more preferably of not more than 0.25 mm and most preferably not more than 0.125 mm.

11. Pressure sensor as claimed in one of the previous claims, wherein the widths of the resistance elements are within the range between 0.25 mm and 2 mm, and preferably between 0.5 mm and 1 mm.

12. Pressure sensor as claimed in one of the previous claims, wherein the layer thickness of the AlₓGa₁₋ₓN layer is not more than 0.2 µm, preferably not more than 0.1 µm, more preferably not more than 0.05 µm and most preferably not more than 0.03 µm.

13. Pressure sensor as claimed in one of the previous claims, wherein the AlₓGa₁₋ₓN layer is applied on a GaN layer of some 100 nm, which itself is applied on the actual substrate material of the measuring diaphragm.

14. Pressure sensor as claimed in one of the previous claims, wherein the measuring diaphragm comprises silicon, silicon nitride, corundum or sapphire.

15. Pressure sensor as claimed in one of the previous claims, further comprising a measurement circuit to measure a signal which depends on the resistance values of the two resistance elements, at least, in the plane of the AlₓGa₁₋ₓN layer.

## Revendications

1. Capteur de pression (1), comprenant :
un corps de capteur (2) ;
une membrane de mesure (4), qui est maintenue par le corps de capteur, pouvant être soumise à une pression et étant déformable en fonction de la pression ; et
au moins deux éléments de résistance (11, 12), qui présentent une couche AlₓGa₁₋ₓN (6), au moins un élément de résistance parmi les au moins deux éléments de résistance étant disposé sur la membrane de mesure (4) et présentant une valeur de résistance variant en fonction de la déformation, **caractérisé en ce**
**qu'**au mois un premier et au moins un deuxième élément de résistance présentent des couches AlₓGa₁₋ₓN avec des teneurs différentes en Al.

2. Capteur selon la revendication 1, pour lequel au moins un deuxième élément de résistance parmi les au moins deux éléments de résistance est disposé sur le corps de capteur ou dans la zone marginale de la membrane de mesure, de telle manière que l'au moins un deuxième élément de résistance présente une dépendance de la déformation tout au plus négligeable.

3. Capteur selon la revendication 1, pour lequel aussi bien l'au moins un premier élément de résistance que l'au moins un deuxième élément de résistance est disposé sur la membrane de mesure, et pour lequel les éléments de résistance subissent des changements variables de la valeur de résistance respective en cas de déformations fonction de la pression de la membrane de mesure.

4. Capteur selon la revendication 3, pour lequel l'au moins un premier et l'au moins un deuxième élément de résistance sont disposés sur des positions, qui présentent des déformations fonction de la pression variables.

5. Capteur selon la revendication 4, pour lequel l'au moins un premier et l'au moins un deuxième élément de résistance sont disposés sur différents rayons d'une membrane de mesure circulaire.

6. Capteur selon l'une des revendications précédentes, pour lequel l'au moins un premier élément de résistance et l'au moins un deuxième élément de résistance présentent des couches AlₓGa₁₋ₓN avec des polarités opposées en raison d'une terminaison différente des couches. Autrement dit, le premier type de résistance présente une couche à terminaison N et l'autre type de résistance une couche à terminaison Ga ou Al.

7. Capteur selon l'une des revendications précédentes, lequel comporte quatre éléments de résistance, qui sont câblés en un pont intégral, deux éléments de résistance étant prévus avec une première dépendance de pression de la valeur de résistance et deux éléments de résistance avec une deuxième dépendance de pression de la valeur de résistance du deuxième type.

8. Capteur selon la revendication 7, pour lequel les éléments de résistance présentent, en position d'équilibre de la membrane de mesure, c'est-à-dire sans déformation fonction de la pression, à peu près la même valeur de résistance.

9. Capteur selon l'une des revendications précédentes, pour lequel les éléments de résistance sont connectés au moyen de pistes métalliques.

10. Capteur selon l'une des revendications précédentes, pour lequel les éléments de résistance présentent une longueur maximale de 1 mm, de préférence une longueur maximale de 0,5 mm, particulièrement de préférence une longueur maximale de 0,25 mm et plus particulièrement de préférence une longueur maximale de 0,125 mm.

11. Capteur selon l'une des revendications précédentes, pour lequel les largeurs des éléments de résistance se situent dans la plage comprise entre 0,25 mm et 2 mm, de préférence entre 0,5 mm et 1 mm.

12. Capteur selon l'une des revendications précédentes, pour lequel l'épaisseur de la couche AlₓGa₁₋ₓN n'élève au maximum à 0,2 µm, de préférence au maximum à 0,1 µm, particulièrement de préférence au maximum à 0,05 µm et plus particulièrement de préférence au maximum à 0,03 µm.

13. Capteur selon l'une des revendications précédentes, pour lequel la couche AlₓGa₁₋ₓN est appliquée sur une couche GaN de quelques 100 nm, laquelle est appliquée à l'intérieur, sur le matériau du substrat effectif de la membrane de mesure.

14. Capteur selon l'une des revendications précédentes, pour lequel la membrane de mesure présente du silicium, du nitrure de silicium, du corindon ou du saphir.

15. Capteur selon l'une des revendications précédentes, comprenant en outre un circuit de mesure destiné à l'acquisition d'un signal, lequel dépend des valeurs de résistance des aux moins deux éléments de résistance dans le plan de la couche AlₓGa₁₋ₓN.
